Europäisches Patentamt

European Patent Office

Office européen des brevets

(11) Publication number: **0 435 376 B1**

## EUROPEAN PATENT SPECIFICATION

(45) Date of publication of patent specification: **05.04.95** (51) Int. Cl.⁶: **F16H 61/06**

(21) Application number: **90203330.7**

(22) Date of filing: **13.12.90**

(54) **Method of controlling gear change in an automatic transmission.**

(30) Priority: **26.12.89 US 456904**
**11.01.90 US 463717**

(43) Date of publication of application:
**03.07.91 Bulletin 91/27**

(45) Publication of the grant of the patent:
**05.04.95 Bulletin 95/14**

(84) Designated Contracting States:
**DE FR GB**

(56) References cited:
**EP-A- 0 234 685       EP-A- 0 281 304**
**EP-A- 0 288 779       EP-A- 0 327 004**
**US-A- 4 527 678       US-A- 4 685 356**

(73) Proprietor: **GENERAL MOTORS CORPORA-
TION**
**General Motors Building**
**3044 West Grand Boulevard**
**Detroit**
**Michigan 48202 (US)**

(72) Inventor: **Lentz, Carl Albert**
**1826 Greencastle Road**
**Mooresville,**
**Indiana 46158 (US)**
Inventor: **Hibner, John Anthony**
**206 East College Street**
**Coldwater,**
**Ohio 45828 (US)**

(74) Representative: **Denton, Michael John et al**
**Patent Section**
**1st Floor**
**Gideon House**
**28 Chapel Street**
**Luton**
**Bedfordshire LU1 2SE (GB)**

Rank Xerox (UK) Business Services
(3.10/3.09/3.3.3)

## Description

This invention relates to a method of controlling the change in an automatic transmission, and more particularly, for a clutch-to-clutch change.

Generally, a motor vehicle automatic transmission includes a number of gear elements coupling its input and output shafts, and a related number of torque establishing devices, such as clutches and brakes which are selectively engageable to activate certain gear elements for establishing a desired speed ratio between the input and output shafts. The brake can be of the band-type or disc-type. Automotive engineers commonly refer to disc-type brakes in transmissions as "clutches" or "reaction clutches". As used herein, the terms "clutches" and "torque transmitting devices" will be used to refer to brakes as well as clutches.

The input shaft is connected to the vehicle engine through a fluid coupling, such as a torque converter, and the output shaft is connected directly to the vehicle wheels. Shifting from one forward speed ratio to another is performed in response to engine throttle and vehicle speed, and generally involves releasing or disengaging the clutch (off-going) associated with the current speed ratio and applying or engaging the clutch (on-coming) associated with the desired speed ratio.

The speed ratio is defined as the transmission input speed or turbine speed divided by the output speed. Thus, a low gear range has a high speed ratio, and a higher gear range has a lower speed ratio. To perform an upshift, a shift is made from a high speed ratio to a low speed ratio. In the type of transmission described below, the upshift is accomplished by disengaging a clutch associated with the higher speed ratio and engaging a clutch associated with the lower speed ratio thereby to reconfigure the gear set to operate at the lower speed ratio. Shifts performed in the above manner are termed clutch-to-clutch shifts and require precise timing in order to achieve high quality shifting.

US-A-4,527,678 discloses a method of controlling a clutch-to-clutch shift including the steps in the preamble of claim 1.

An aspect of the present invention provides a method of controlling the change in an automatic transmission from an off-going fluid pressure operated torque transmitting device associated with a first speed ratio to an on-coming fluid pressure operated torque transmitting device associated with a second speed ratio characterised over US-A-4,527,678 by the features in the characterising portion of claim 1.

The invention can provide a method of controlling a clutch-to-clutch shift by establishing a slip speed profile and controlling the slip speed of the on-coming clutch to the profile by adjusting the pressure on one of the clutches to minimize the slip speed error.

Preferably, the method generates a slip speed profile which quickly and smoothly achieves on-coming clutch synchronization.

In an embodiment, the method controls an upshift in an automatic transmission by disengaging one clutch and engaging another clutch in a controlled manner and using transmission speed feedback to manage the control. In particular, a motor vehicle automatic transmission with an electronic control system can achieve high quality shifts by monitoring input and output speed to determine the effects of the clutch operations on the input speed and calculating on-coming clutch slip for closed-loop clutch control.

The present invention is also directed to apparatus comprising means for carrying out the steps of the described method.

An embodiment of the present invention is described below, by way of illustration only, with reference to the accompanying drawings, in which:

Figure 1a is a system diagram of a fluid operated motor vehicle transmission, including several solenoid operated fluid pressure control valves and a control unit;

Figure 1b is a table illustrating the clutch engagements required to establish the various speed ratios of the transmission of Figure 1a;

Figures 2, 3a and 3b are flow diagrams of an embodiment of method of controlling gear change by means of the controller of Figure 1a;

Figure 4, graphs A, B and C, are graphs illustrating turbine speed, off-going pressure command and on-coming pressure command, respectively, for clutch-to-clutch shifting;

Figure 5 is a slip diagram for the closed-loop operation of the on-coming clutch;

Figures 6 through 9 are flow diagrams illustrating an embodiment of upshift logic for the on-coming clutch; and

Figures 10 and 11 are flow diagrams illustrating an embodiment of upshift logic for the off-going clutch.

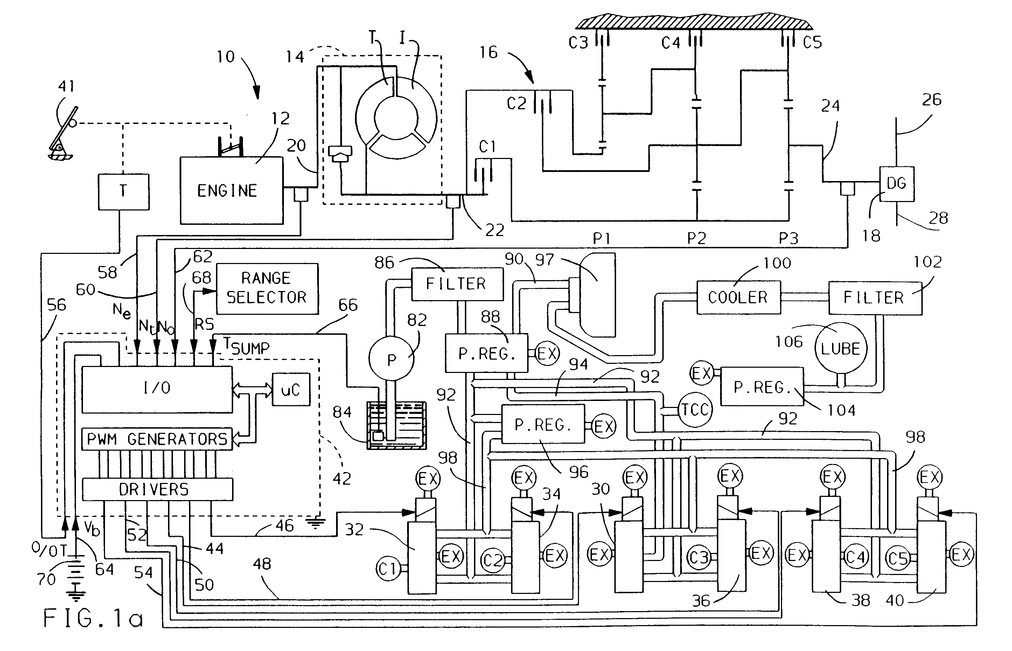

Referring now to Figure 1a, the reference numeral 10 generally designates a motor vehicle drive train which includes a throttled internal combustion engine 12, a fluidic torque converter 14, a six-speed fluid operated power transmission 16 and a differential gear set (DG) 18. The engine 12 is connected to the torque converter 14 via shaft 20, the torque converter 14 is connected to the transmission 16 via shaft 22, the transmission 16 is connected to the differential gear set 18 via shaft 24 and the differential gearset is connected to a pair of drive wheels (not shown) via the prop shafts 26 and 28.

Gear shifts are accomplished by selectively engaging and disengaging brakes and clutches, herein called torque transmitting devices or clutches. These clutches are actuated by hydraulic pressure and upon engagement, require a fill time before torque is transmitted between a driving and a driven friction element.

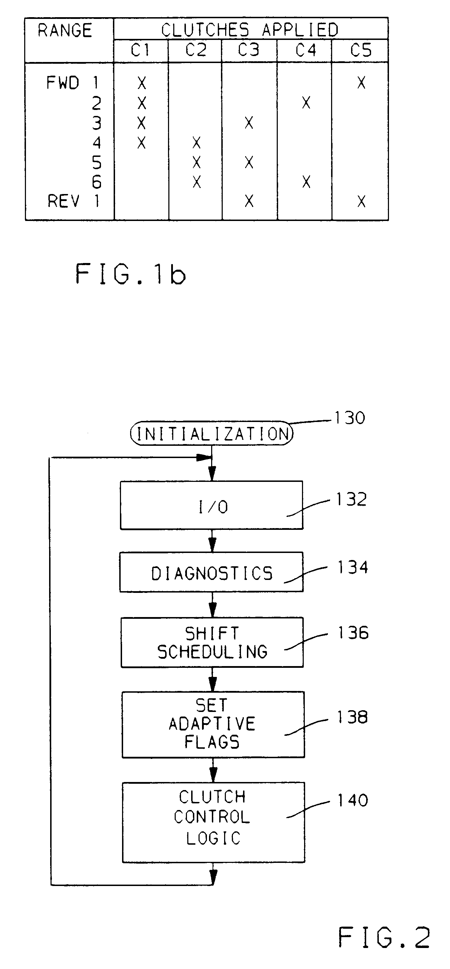

The speed and torque relationships between the engine 12 and the drive wheels of the vehicle are controlled by a fluid operated torque converter clutch, designated TCC, and five fluid operated transmission clutches, designated C1 - C5. The torque converter clutch TCC is selectively engaged by the solenoid operated control valve 30 to connect mechanically the impeller I and turbine T of torque converter 14. The clutches TCC, C1, C2, C3, C4, C5 are selectively engaged and disengaged by the solenoid operated control valves 30, 32, 34, 36, 38, 40 according to the diagram shown in Figure 1b, selectively to establish a desired transmission speed ratio. The illustrated transmission gear set provides one reverse ratio and six forward ratios, and is described in detail in U.S. Patent 4,070,927. An operator actuated accelerator pedal 41 positions the engine throttle for controlling the engine power output.

The operation of the solenoid operated control valves 30 - 40 is controlled by a computer-based control unit 42, shown in dotted outline, via lines 44 - 54 in response to various input signals representative of system parameters. Such inputs include an engine throttle position signal %T on line 56, an engine output shaft speed signal Ne on line 58, a torque converter output shaft speed signal Nt on line 60, a transmission output shaft speed signal No on line 62, a system supply voltage signal Vb on line 64, a transmission fluid temperature signal Tsump on line 66 and an operator range selector position signal RS on line 68. The system voltage is supplied by the storage battery 70, and the input signals are obtained with conventional electrical transducers such as potentiometers, thermistors and magnetic speed pickups.

Internally, the control unit 42 comprises a number of conventional devices including a microcomputer (uC) with internal clock and memory, an input/output device (I/O) and an array of pulse width modulated signal generators (PWM) and drivers (DR). As indicated below, a PWM generator and a driver (DR) are dedicated to each solenoid operated control valve 30 - 40. The PWM generator outputs are delivered to the respective drivers (DR) and are used to energize the respective solenoid operated control valves. The duty cycle of the PWM generator outputs determine the hydraulic pressure supplied by the solenoid generated control valves, with a low percent duty cycle yielding a low pressure and a high percent duty cycle yielding a high pressure for a normally closed valve.

The hydraulic circuit of transmission 16 includes a positive displacement pump 82 for supplying pressurized hydraulic fluid from the sump or reservoir 84, to the clutches TCC and C1 - C5 through various hydraulic and electro-hydraulic valving mechanisms. After passing through a main circuit filter 86, the fluid output of pump 82 is directed to a main pressure regulator valve 88 which develops regulated fluid pressures in lines 90 and 92.

The fluid in line 90, generally referred to as converter feed pressure, is directed through the torque converter 14, as schematically designated by the converter shell 97. After passing through a cooler 100 and cooler filter 102, the converter fluid is then regulated down to a lower pressure by the regulator valve 104 and directed to the transmission lube, or lubricant circuit 106.

The fluid in line 92, generally referred to as main or line pressure, is supplied as an input to the solenoid operated control valves 30 - 40, and also to the control pressure regulator valve 96. The control pressure regulator valve 96 develops a somewhat lower pressure in line 98, referred to herein as the control pressure, such pressure being directed to the solenoid of each control valve 30 - 40.

The fluid in line 94, referred to as the converter clutch pressure, is supplied directly by solenoid 30 to the torque converter clutch TCC to engage the same. This pressure is also supplied to the main pressure regulator valve 88 to provide a lower regulated line pressure in the converter lock-up mode.

Figures 2, 3 and 6 - 11 are flow diagrams representative of computer program instructions executed by the computer-based control unit 42 of Figure 1 in carrying out the shift control technique described below.

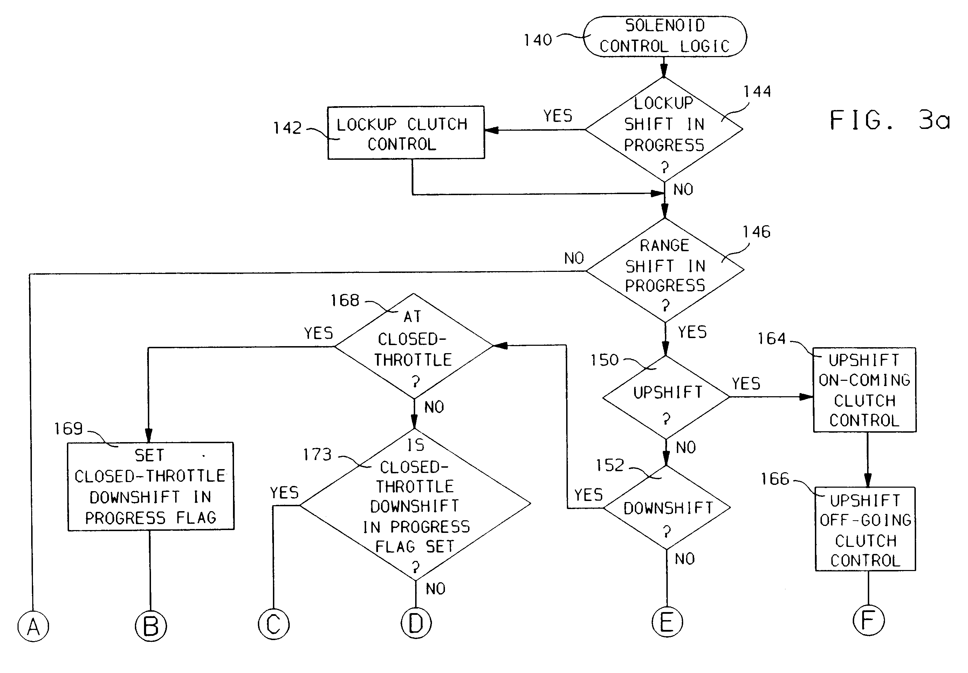

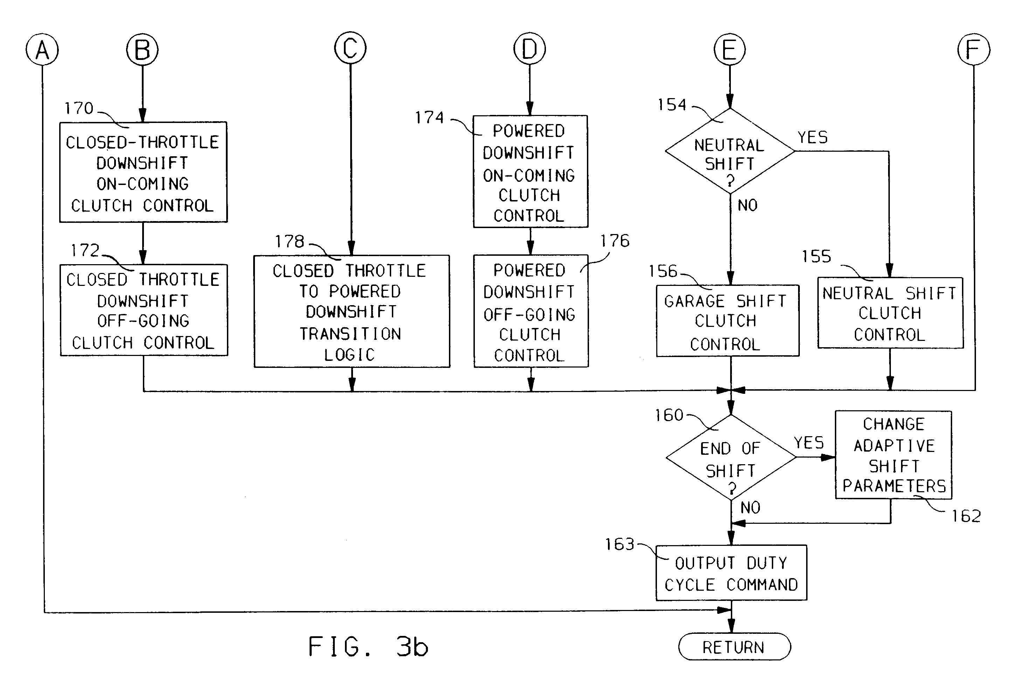

Figure 2 represents an executive or main loop program which directs the sequential execution of various subroutines. Block 130 designates a series of instructions executed at the initiation of each period of vehicle operation for setting the various timers, registers and variable values of control unit 42 to predetermined initial values. Thereafter, the blocks 132 - 140 are sequentially and repeatedly executed as indicated by the flow diagram lines. Block 132 reads the various input signal values and outputs the required control signals to the PWM generators and drivers for solenoid controlled valves 30 - 40. Blocks 134 - 138 contain diagnostic, shift scheduling, and adaptive flag logic. The clutch control logic block 140 analyzes the various system input signals described above in reference to Figure 1a, develops pressure command signals PCMD for application to the solenoid operated control valves at the next execution of block 132, and computes adaptive corrections based on the adaptive flags at shift completion. Block 140 also effects pulse-width-modulation of the solenoid drive voltage to carry out the pressure commands for specific shift operations. Block 140 is detailed in the flow chart of Figures 3a - 3b.

The flow diagram of Figures 3a - 3b sets forth the program for making decisions as to the type of range shift in progress, if any, and determines the specific control for the on-coming and the off-going clutches. The program also checks whether a shift has performed within specifications, and if not, certain shift parameters are changed at shift completion according to predefined adaptive logic to correct the shift. First, lockup clutch control is executed 142 if a lockup shift is in progress 144. Then it is determined (from the shift schedule) whether a range shift is in progress 146. If not, the clutch control logic is exited. If a range shift is in progress 146, it is determined whether it is an upshift 150, a downshift 152, a neutral shift 154, or a garage shift 156. A garage shift is a shift from neutral to either drive or reverse, or a shift from drive to reverse or from reverse to drive. The control flows from either the upshift, downshift, neutral shift or the garage shift block to the end-of-shift test 160. Once the shift is completed 160, adaptive shift parameters are changed if required 162 and the duty cycle command is output 163. If the shift has not ended 160, the duty cycle command is output 163 before returning to the main loop of Figure 2.

If an upshift is indicated 150, the upshift on-coming clutch control 164 and the upshift off-going clutch control 166 are activated. If a downshift is indicated 152, it is next decided whether it is a closed throttle downshift or a powered downshift 168. If it is closed throttle, a closed throttle in progress flag is set 169, the closed throttle on-coming clutch control is activated 170 and the closed throttle off-going clutch control is activated 172. If the downshift is not at closed throttle 168, the closed throttle flag is checked 173. If the flag is not set, the powered downshift on-coming clutch control 174 and the powered downshift off-going clutch control 176 are activated. If the closed throttle flag is set 173, the throttle opened during the course of the closed throttle downshift and a transition to powered downshift may be necessary; in such case, the appropriate transition logic is invoked 178. If the shift is a neutral shift 154, the neutral shift clutch control executes shifts from drive to neutral or from reverse to neutral 158.

Each control phase operates by setting pressures, pressure increments, times or other values to predefined calibrated values which are herein generally called "set", "preset", "given" or "certain" values. Each such value is chosen from a table of calibrated values for each specific transmission condition, throttle range and shift type. Thus, different values are supplied for upshift, downshift, etc. as well as each range shift, e.g., 1-2, 2-1, 4-3, 5-4, etc. Converter and lockup modes may also require separate sets of calibration values.

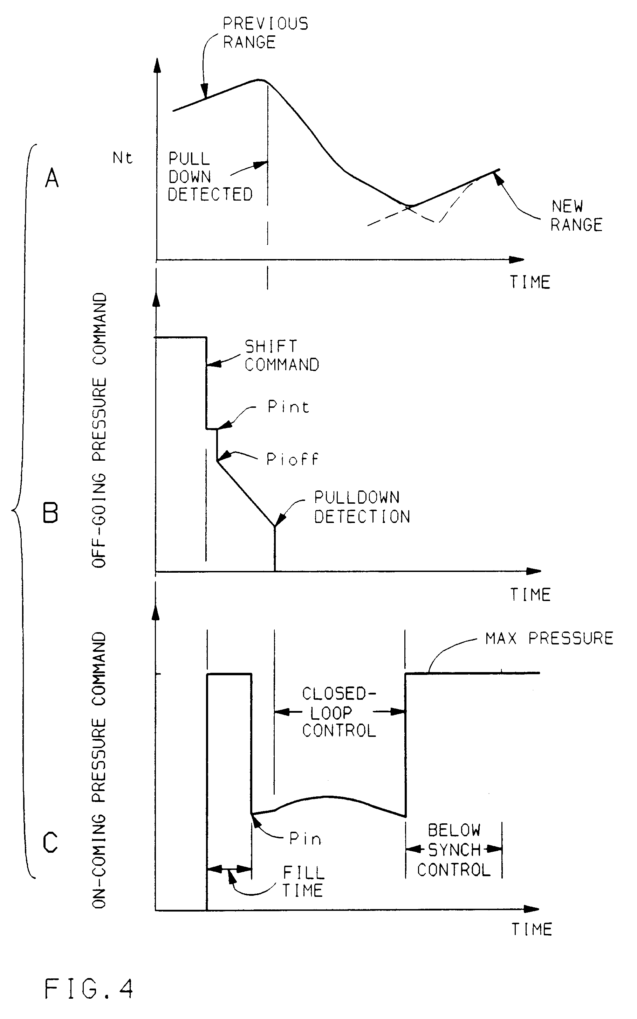

Figure 4, graphs A, B, and C, detail the controlled clutch pressure for an upshift as well as the turbine speed or input speed. Graph A is a graph of turbine speed versus time, graph B, shows the commanded pressure versus time for the off-going clutch, and graph C shows the commanded pressure versus time for the on-coming clutch. Graph A curve is typical for the case of increasing vehicle speed prior to shift initiation, and indicates the turbine speed during the first range, the speed decrease during shifting, and increase again at a lower level after shifting. The peak of the turbine speed is due to the slowing action of the on-coming clutch, causing slip of the off-going clutch, and is indicative of "turbine pulldown". Turbine pulldown is detected by sensing when the turbine speed falls a set amount below the output speed multiplied by the higher speed ratio. The speed after shifting is "synchronous speed", i.e., the turbine speed ($N_t$) equals the output speed ($N_o$) times the lower speed ratio ($SR$) or $N_t = N_o * SR$.

Referring to graphs B and C, it may be observed that initially, at the time of the shift command, the off-going pressure is reduced to an intermediate value, Pint, for a brief time and is then reduced to an initial value, Pioff, and then ramps down until off-going clutch slip (or turbine pulldown) is detected and then drops to zero. The brief intermediate value, Pint, is effective to reduce clutch pressure undershoot caused by solenoid dynamics.

For the on-coming clutch, graph C shows that maximum pressure is commanded for a fill time. The fill time allows nearly complete stroking of the clutch plates and obtains clutch torque capacity. Then the command pressure drops to an initial value, Pin, and ramps up slowly until it causes turbine pulldown. The combination of the on-coming upward ramp and the off-going downward ramp results in a torque transition from the off-going to the on-coming clutch. Then the on-coming clutch control enters a closed-loop control period, wherein the pressure is adjusted to maintain the on-coming clutch slip close to a calculated slip profile. When the turbine speed, $N_t$, reaches synchronous speed, the pressure command is increased to maximum value to engage the clutch fully and complete the shift.

The upshift process of this embodiment has several features which contribute to smooth and efficient operation. The on-coming and off-going pressure ramp commands reduce clutch timing sensitivity to the initial pressure commands. Thus, variations in clutches due to temperature or other factors do not impose critical demands on the timing of torque transition because the two ramps can continue for a variable time, subject to a limit value, so that the actual assumption of torque by the on-coming clutch determines the time of transition. Also, the immediate release of the off-going clutch following pulldown detection reduces clutch tie-up which might result in a braking action. The closed-loop control of the on-coming clutch reduces shift variation and the end-of-shift torque disturbance.

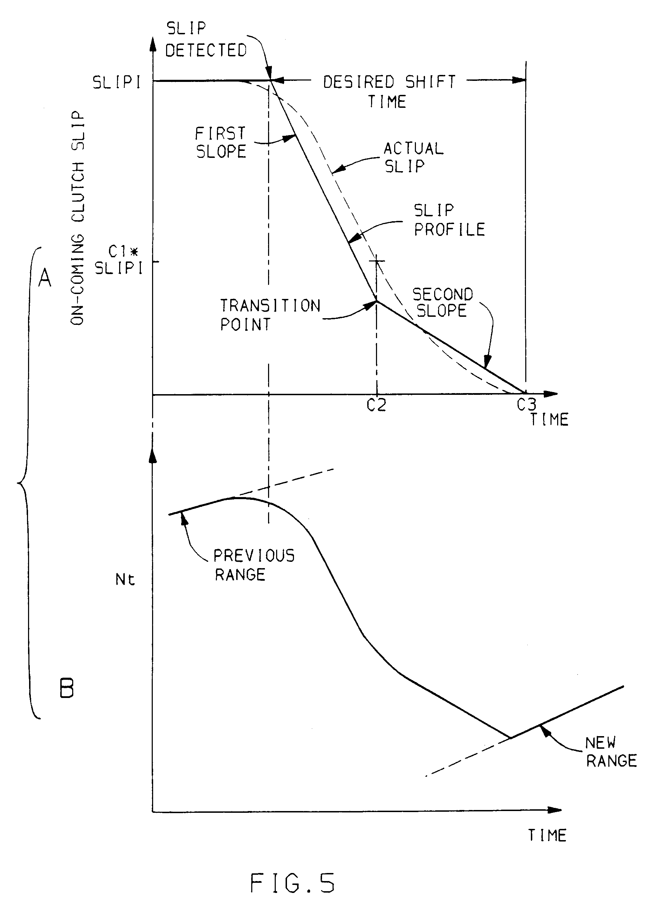

The closed-loop control is better explained with reference to Figure 5 which shows the on-coming slip speed profile in solid lines and actual slip speed in dashed lines. Slip speed is determined by comparing the turbine speed to the output speed. Specifically, slip speed is the absolute difference (times a conversion factor K) between turbine speed and the product of the output speed and the speed ratio of the lower range or $SLIP = K*ABS(Nt- No*SR)$. Thus, as soon as a shift command is issued there is a slip speed across the on-coming clutch. The initial slip speed, SLIPI, is the slip speed value at the detection of turbine pulldown. The slip speed profile begins at that point and decreases at a fixed rate, called the first slope. Then, at a determined point, the rate reduces to a second slope. The slopes are chosen so that, ideally, the actual slip speed can be made to smoothly go to zero within a given time period. The second slope is less steep than the first slope and reduces end of shift torque disturbance by more closely matching the acceleration rates on both sides of the on-coming clutch. By using on-coming clutch slip speed as the control target, both turbine and output speeds are taken into account when controlling the shift duration.

To determine the slopes, three constants are defined. C1 is a fraction of the initial slip value SLIPI at which the second slope begins; i.e., if SLIP =< C1*SLIPI, the slope changes to slope 2. C2 is the desired time to utilize the first slope. C3 is the desired overall closed loop time. C2 and C3 are used only for the slope calculation and not for direct timing purposes. Then the first slope shall be SLOPE1 = [SLIPI-(C1*SLIPI)]/C2. The second slope shall be SLOPE2 = C1*SLIPI/(C3-C2).

The arrival at synchronization speed is determined by making several measurements in consecutive control loops. This assures that true synchronization has been achieved and maintained. If synchronization is assured, full clutch pressure is immediately applied. In the event the turbine speed goes below the synchronization speed, as shown in dashed lines in Figure 4, it is smoothly pulled up to synchronization speed by ramping the pressure up over a fixed period. This feature prevents full application of the on-coming clutch (during closed throttle shifts) when the on-coming clutch is not completely stroked. The "below sync" condition can only result when turbine pulldown is achieved through a "neutral" condition caused by lack of on-coming clutch capacity. The ramp application of the on-coming clutch will significantly reduce end-of-shift torque disturbance.

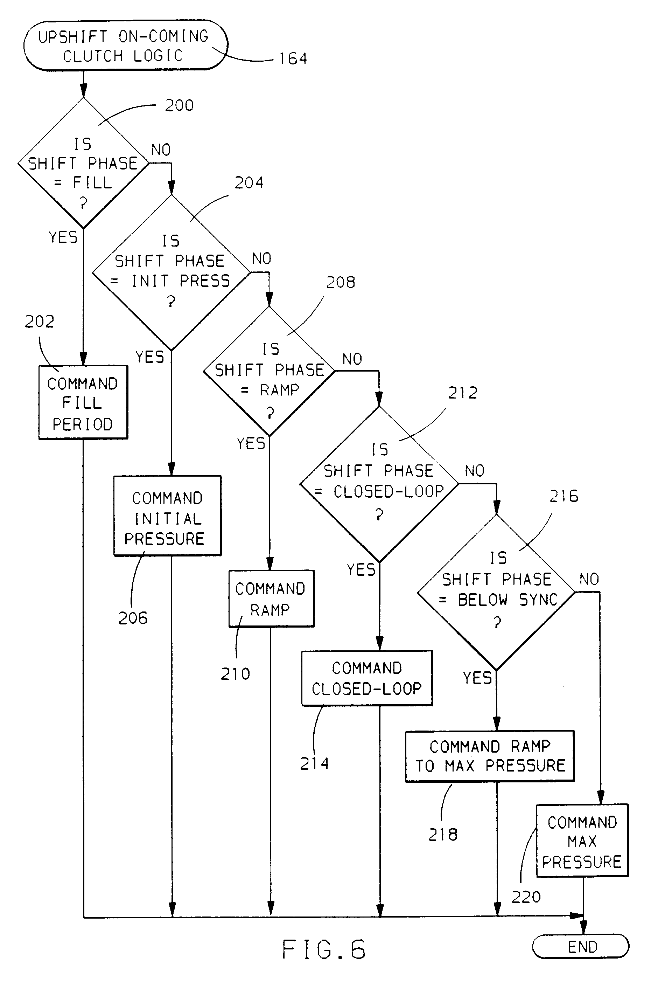

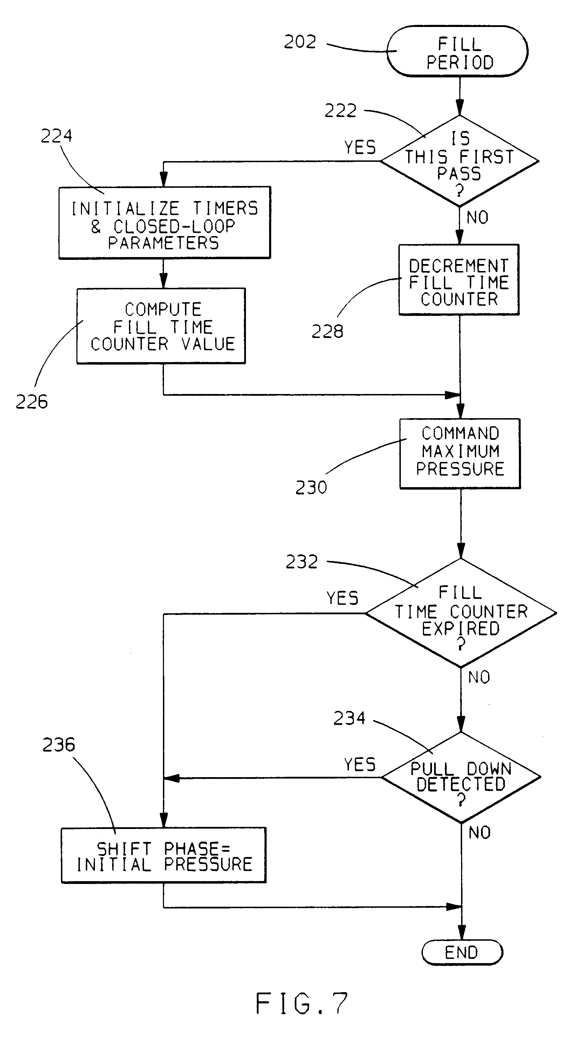

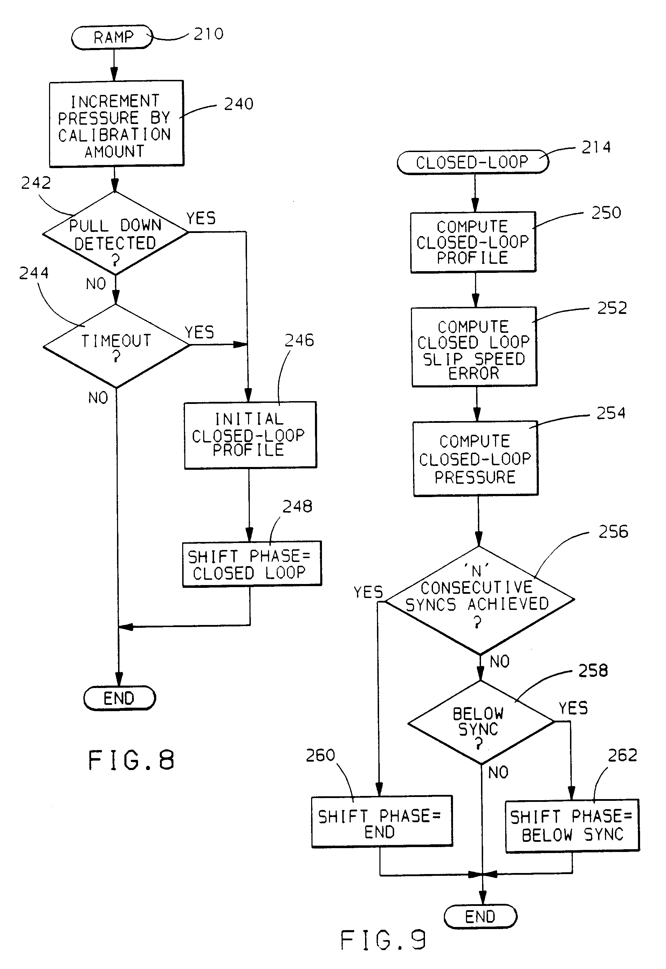

The flow charts of Figures 6 - 11 illustrate the control logic incorporated in the program for shift control. Figure 6 shows the logic flow for the upshift on-coming clutch. SHIFT PHASE is a pointer indicating the stage of shift progress. If the SHIFT PHASE is set to FILL PERIOD 200, the fill period routine is executed 202, as shown in Figure 7, otherwise, it is determined whether the SHIFT PHASE is set to INIT PRESS 204. If so, the initial pressure routine is executed 206; that routine sets the initial calibration pressure, Pint, and sets the SHIFT PHASE pointer to RAMP. If the SHIFT PHASE is RAMP 208, the ramp routine is executed 210, as shown in Figure 8. If the SHIFT PHASE is CLOSED LOOP 212, the closed-loop routine is executed 214, as shown in Figure 9. If SHIFT PHASE is set to BELOW SYNC 216, the below sync routine is executed 218. The below sync routine increments the pressure by a set amount in each control loop until maximum pressure is reached. If SHIFT PHASE is not BELOW SYNC the maximum pressure is commanded 220.

The fill period routine is shown in Figure 7. If it is the first pass through this loop 222, the timers and closed-loop parameters are initialized 224 and fill time is computed 226; the fill time is expressed by a counter as a number of control loops and sets a maximum time for filling. If it is not the first pass, the fill time counter is decremented 228 and the maximum pressure is commanded 230. If the fill time counter is not expired 232 and turbine pulldown is not detected 234, the loop repeats. Otherwise, SHIFT PHASE is set to INIT PRESS 236 and the program control goes to that phase.

The ramp routine, as shown in Figure 8, increments pressure by a set amount 240. If turbine pulldown 242 or timeout 244 occurs, the closed-loop profile is initialized 246 and SHIFT PHASE is set to CLOSED LOOP 248. Otherwise, the ramp routine repeats until one of the above requirements is met. The timeout is based on the previously calculated fill time plus a constant value to limit the total time elapsed between the shift initiation and the initiation of closed loop.

The closed-loop routine as shown in Figure 9, comprises computing the closed-loop profile 250, computing a closed-loop slip speed error 252, computing the closed-loop pressure required to reduce the error 254, and test for achieving sync 256 and below sync condition 258. If neither condition applies, the loop repeats to control the clutch slip. If a set number "N" of consecutive sync speeds are detected 256, the SHIFT PHASE is set to END 260 which causes maximum pressure to be applied 220. If the below sync condition is detected 258, SHIFT PHASE is set to BELOW SYNC 262.

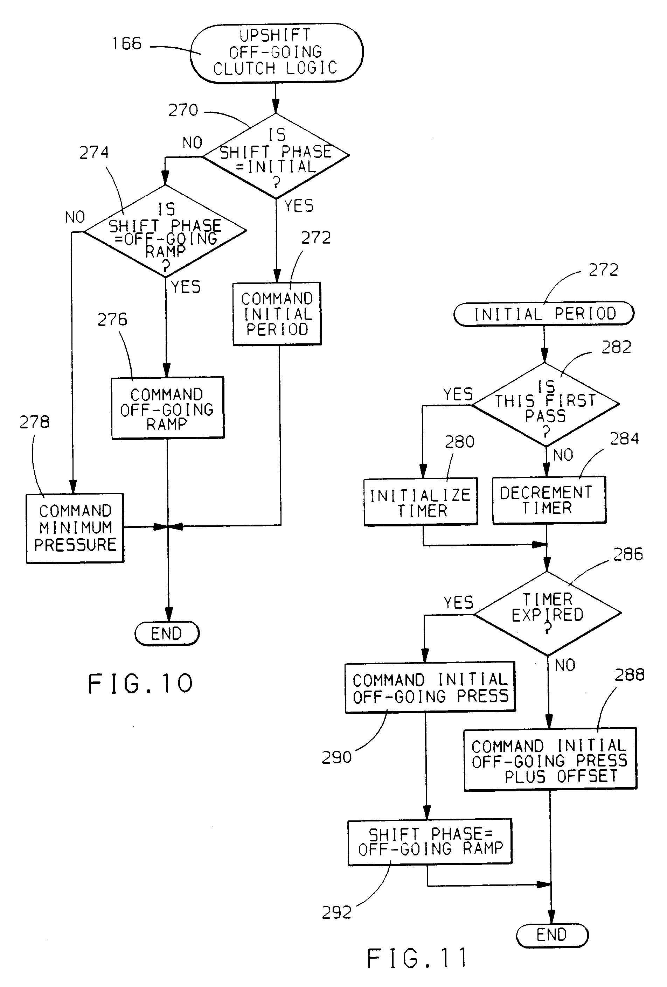

The upshift off-going clutch control 166 is shown in Figure 10. If SHIFT PHASE is set to INITIAL 270, the initial period routine is executed 272 as shown in Figure 11. If the SHIFT PHASE is set to OFF-GOING RAMP 274, the off-going ramp routine 276 is executed. That routine decrements pressure by a set amount if the on-coming SHIFT PHASE is not in CLOSED LOOP or commands an exhaust state if it is in CLOSED LOOP. In the latter case, the minimum pressure command 278 is executed.

In Figure 11, the initial period routine 272 initializes a timer 280 if it is the first pass 282, or decrements the timer 284 if it is not the first pass. Then, if the timer is not expired 286, the initial off-going pressure plus an offset is commanded 288 to establish the intermediate pressure, Pint. If the timer is expired, the initial off-going pressure value Pioff, is commanded 290 and the SHIFT PHASE is set to OFF-GOING RAMP 292.

Reference is made to our co-pending applications EP-A-0,435,374, EP-A-0,436,977, EP-A-0,435,377, EP-A-0,435,372 and EP-A-0,436,978 filed and published the same day as this application.

## Claims

1. A method of controlling the change in an automatic transmission for a vehicle from an off-going fluid pressure operated torque transmitting device (C1-C5) associated with a first speed ratio to an on-coming fluid pressure operated torque transmitting device (C1-C5) associated with a second speed ratio, wherein the off-going torque transmitting device is disengaged substantially concurrently with the engagement of the on-coming torque transmitting device, the automatic transmission including an input (22), an output (24), a turbine (14) connected to the input to couple driving torque thereto and turbine speed (Nt) and output speed (No) sensing means (60, 62); the method comprising the steps of applying a progressively decreasing off-going pressure on the off-going torque transmitting device (C1-C5); preparing the on-coming torque transmitting device (C1-C5) to provide torque by applying a substantially sufficient pressure thereto; initiating a closed-loop control period for controlling the on-coming torque transmitting device; during the closed-loop control period, establishing a slip speed profile representative of desired slip during the closed-loop period, measuring the slip speed of the on-coming torque transmitting device, and progressively changing the pressure on one of the off-going and on-coming torque transmitting devices to control the measured slip speed on the basis of the slip speed profile, and reducing slip speed towards zero; characterised in that the step of establishing a slip speed profile includes the steps of generating a ramp beginning at an initial slip speed and having a first slope and a second slope, the first slope being relatively steeper than the second slope so as to reduce slip speed at a first greater rate, and the second slope being adapted to effect synchronization of the on-coming torque transmitting device.

2. A method according to claim 1, wherein the step of preparing the on-coming torque transmitting device to provide torque comprises the steps of applying sufficient pressure on the on-coming torque transmitting device to cause slip of the off-going torque transmitting device, detecting slip of the off-going torque transmitting device on the basis of the turbine speed and the output speed, and initiating the closed-loop control period on detection of slip of the off-going torque transmitting device.

3. A method according to claim 1 or 2, wherein the step of establishing the slip speed profile includes the steps of obtaining a fraction of the initial slip speed at which the first slope is to terminate, a desired first slope time during which the ramp is to have the first slope, and a desired overall slip time; determining the gradient of the first slope on the basis of the initial slip speed, the fraction and the desired first slope time; determining the gradient of the second slope on the basis of the initial slip speed, the fraction, the desired first slope time, and the desired overall slip time; and changing the gradient of the ramp from the first slope to the second slope when the actual slip speed reaches the fraction of the initial slip speed.

4. A method according to any preceding claim, wherein the change is from a higher speed ratio, with which the off-going torque transmitting device is associated, to a lower speed ratio, with which the on-coming torque transmitting device is associated.

5. A method according to claim 4, wherein the step of applying a progressively decreasing off-going pressure on the off-going torque transmitting device is carried out during a pressure relief period; the method comprising the steps of, during the pressure relief period, applying on-coming pressure to the on-coming torque transmitting device for a set time up to an initial on-coming pressure, and increasing the on-coming pressure at a rate calibrated to achieve a predetermined decrease in turbine speed, and removing the off-going pressure from the off-going torque transmitting device; and determining synchronization of the on-coming torque transmitting device from a comparison of the turbine speed and the output speed and, when turbine speed decreases to a synchronization speed, increasing the on-coming pressure to a maximum value to complete the change.

6. A method according to claim 5, wherein the step of applying a progressively decreasing off-going pressure on the off-going torque transmitting device comprises the step of applying an intermediate off-going pressure for a set period, applying an initial off-going ramp pressure, and then applying a decreasing off-going ramp pressure.

7. A method according to claim 5 or 6, including the step of comparing turbine speed and the product of output speed and the higher speed ratio to detect turbine speed pulldown during the pressure relief period, wherein the steps of removing the pressure from the off-going torque transmitting device and initiating a closed-loop control period of the on-coming torque transmitting is carried out on detection of turbine speed pulldown.

8. A method according to claim 5, 6 or 7, wherein synchronization is determined to have occurred when the turbine speed is substantially equal to the product of the output speed and the lower speed ratio.

9. A method according to any one of claims 5 to 8, wherein the step of increasing the on-coming pressure comprises the step of gradually increasing the on-coming pressure to the maximum value to complete the change, if turbine speed decreases to a value below synchronization value.

**Patentansprüche**

1. Ein Verfahren zur Steuerung des Wechselns in einem automatischen Kraftfahrzeuggetriebe von einem losgehenden, fluiddruckbetriebenen, Drehmoment übertragenden Gerät (C1-C5), das zu einem ersten Geschwindigkeitsverhältnis gehört, zu einem herankommenden, fluiddruckbetriebenen drehmomentübertragenden Gerät (C1-C5), das zu einem zweiten Geschwindigkeitsverhältnis gehört, worin das losgehende drehmomentübertragende Gerät im wesentlichen gleichlaufend mit dem In-Eingriff-treten des herankommenden drehmomentübertragenden Gerätes außer Eingriff gebracht wird, das automatische Getriebe einen Eingang (22), einen Ausgang (24), eine Turbine (14), die mit dem Eingang verbunden ist, um antreibendes Drehmoment daran zu kuppeln, und turbinengeschwindigkeits- (Nt) und ausgangsgeschwindigkeits- (No) -erfassende Mittel (60 ,62) umfaßt; wobei das Verfahren die Schritte umfaßt, daß ein progressiv abnehmender Losgehdruck an das losgehende drehmomentübertragende Gerät (C1-C5) angelegt wird; das herankommende drehmomentübertragende Gerät (C1-C5) vorbereitet wird, Drehmoment vorzusehen, indem ein im wesentlichen hinreichender Druck daran angelegt wird; eine Regelperiode mit geschlossener Schleife für das Regeln des herankommenden drehmomentübertragenden Gerätes initialisiert wird; während der Regelperiode mit geschlossener Schleife ein Schlupfgeschwindigkeitsprofil herbeigeführt wird, das für den gewünschten Schlupf während der geschlossenen Schleife-Periode repräsentativ ist, die Schlupfgeschwindigkeit des herankommenden, drehmomentübertragenden Geräts gemessen wird und der Druck auf einem der losgehenden und herankommenden drehmomentübertragenden Geräte progressiv geändert wird, um die gemessene Schlupfgeschwindigkeit auf der Grundlage des Schlupfgeschwindigkeitsprofils zu regeln und die Schlupfgeschwindigkeit in Richtung auf Null zu verringern, dadurch gekennzeichnet, daß der Schritt des Herbeiführens eines Schlupfgeschwindigkeitsprofils die Schritte umfaßt, daß eine Rampe erzeugt wird, die mit einer anfänglichen Schlupfgeschwindigkeit beginnt und eine erste Steigung und eine zweite Steigung aufweist, wobei die erste Steigung relativ steiler als die zweite Steigung ist, um so die Schlupfgeschwindigkeit mit einer ersten größeren Rate zu verringern, und die zweite Steigung dazu angepaßt ist, die Synchronisation des herankommenden drehmomentübertragenden Gerätes zu bewirken.

2. Ein Verfahren nach Anspruch 1, worin der Schritt des Vorbereitens des herankommenden drehmomentübertragenden Gerätes, um Drehmoment vorzusehen, die Schritte umfaßt, daß hinreichend Druck an das herankommende drehmomentübertragende Gerät angelegt wird, um Schlupf des losgehenden drehmomentübertragenden Gerätes zu verursachen, Schlupf des losgehenden drehmomentübertragenden Gerätes auf der Grundlage der Turbinengeschwindigkeit und der Ausgangsgeschwindigkeit detektiert wird, und die Geschlossene-Schleife-Regelperiode auf die Detektion des Schlupfes des losgehenden drehmomentübertragenden Gerätes initialisiert wird.

3. Ein Verfahren nach Anspruch 1 oder 2, worin der Schritt des Herbeiführens des Schlupfgeschwindigkeitsprofils die Schritte umfaßt, daß ein Bruchteil der anfänglichen Schlupfgeschwindigkeit, bei welcher die erste Steigung abschließen soll, eine gewünschte erste Steigungszeit, während welcher die Rampe die erste Steigung aufweisen soll, und eine gewünschte Gesamtschlupfzeit erhalten wird; der Gradient der ersten Steigung auf der Grundlage der anfänglichen Schlupfgeschwindigkeit, des Bruchteils und der gewünschten ersten Steigungszeit bestimmt wird; der Gradient der zweiten Steigung auf der Grundlage der anfänglichen Schlupfgeschwindigkeit, des Bruchteils, der gewünschten ersten Steigungszeit und der gewünschten Gesamtschlupfzeit bestimmt wird; und der Gradient der Rampe von der ersten Steigung zu der zweiten Steigung geändert wird, wenn die tatsächliche Schlupfgeschwindigkeit den Bruchteil der anfänglichen Schlupfgeschwindigkeit erreicht.

4. Ein Verfahren nach irgendeinem vorhergehenden Anspruch, worin der Wechsel von einem Verhältnis mit höherer Geschwindigkeit, zu welchem das losgehende drehmomentübertragende Gerät gehört, zu einem Verhältnis mit niedrigerer Geschwindigkeit stattfindet, zu welchem das herankommende drehmomentübertragende Gerät gehört.

5. Ein Verfahren nach Anspruch 4, worin der Schritt des Anlegens eines progressiv abnehmenden Losgeh-Drucks an das losgehende drehmomentübertragende Gerät während einer Drucklöseperiode ausgeführt wird; das Verfahren die Schritte umfaßt, daß während der Drucklöseperiode Herankommdruck an das herankommende drehmomentübertragende Gerät für eine eingestellte Zeit bis zu einem anfänglichen Herankommdruck angelegt wird und der Herankomm-Druck mit einer Rate erhöht wird, die kalibriert wird, um eine vorbestimmte Abnahme der Turbinengeschwindigkeit zu erreichen und der Losgehdruck von dem losgehenden drehmomentübertragenden Gerät entfernt wird; und die Synchronisation des herankommenden drehmomentübertragenden Gerätes aus einem Vergleich der Turbinengeschwindigkeit und der Ausgangsgeschwindigkeit bestimmt wird, und daß, wenn die Turbinengeschwindigkeit zu einer Synchronisationsgeschwindigkeit abnimmt, der herankommende Druck zu einem maximalen Wert erhöht wird, um den Wechsel abzuschließen.

6. Ein Verfahren nach Anspruch 5, worin der Schritt des Anlegens eines progressiv abnehmenden Losgehdrucks an das losgehende drehmomentübertragende Gerät den Schritt umfaßt, daß ein intermediärer Losgehdruck für eine eingestellte Periode angelegt wird, ein anfänglicher Losgehrampendruck angelegt wird und dann ein abnehmender Losgehrampendruck angelegt wird.

7. Ein Verfahren nach Anspruch 5 oder 6, das den Schritt umfaßt, daß die Turbinengeschwindigkeit und das Produkt der Ausgangsgeschwindigkeit und des höheren Geschwindigkeitsverhältnisses verglichen werden, um Turbinengeschwindigkeitsherabziehen während der Drucklöseperiode zu detektieren, worin die Schritte des Entfernens des Drucks von dem losgehenden drehmomentübertragenden Gerät und des Initialisierens einer Geschlossenen-Schleife-Periode des herankommenden Drehmomentübertragens auf die Detektion des Turbinengeschwindigkeitsherabziehens hin ausgeführt werden.

8. Ein Verfahren nach Anspruch 5, 6 oder 7, worin bestimmt wird, daß die Synchronisation aufgetreten ist, wenn die Turbinengeschwindigkeit im wesentlichen dem Produkt der Ausgangsgeschwindigkeit und des niedrigeren Geschwindigkeitsverhältnisses gleich ist.

9. Ein Verfahren nach einem der Ansprüche 5 bis 8, worin der Schritt des Erhöhens des Herankommdrucks den Schritt umfaßt, daß der Herankommdruck graduell zu dem maximalen Wert erhöht wird, um den Wechsel abzuschließen, wenn die Turbinengeschwindigkeit zu einem Wert unterhalb des Synchronisationswertes abnimmt.

**Revendications**

1. Procédé de commande de changement de vitesse dans une boîte de vitesse automatique de véhicule entre un dispositif de transmission de couple de départ actionné par pression de fluide (C1 à C5) associé à un premier rapport de vitesse et un dispositif de transmission de couple (C1 à C5) d'arrivée actionné par pression de fluide associé à un deuxième rapport de vitesse, dans lequel le dispositif de transmission de couple de départ est désenclenché sensiblement en même temps que le dispositif transmetteur de couple d'arrivée est enclenché, la boîte de vitesse automatique comprenant une entrée (22), une sortie (24), une turbine (14) reliée à l'entrée pour y coupler un couple d'entraînement et des moyens de détection (60, 62) de la vitesse de la turbine (Nt) et de la vitesse de sortie (No), le procédé comprenant les étapes consistant à appliquer une pression de départ diminuant progressivement sur le dispositif transmetteur de couple de départ (C1 à C5), à préparer le dispositif de transmission de couple d'arrivée (C1 à C5) pour instaurer un couple en lui appliquant une pression sensiblement suffisante, à amorcer une période de commande en boucle fermée pour commander le dispositif de transmission de couple d'arrivée, à établir, au cours de la période de commande en boucle fermée, un profil de vitesse de patinement représentatif du patinement souhaité au cours de la période en boucle fermée, à mesurer la vitesse de patinement du dispositif transmetteur de couple d'arrivée, et à changer progressivement la pression sur l'un des dispositifs transmetteurs de couple de départ et d'arrivée pour commander la vitesse de patinement mesurée sur la base du profil de vitesse de patinement, et à réduire la vitesse de patinement vers zéro, caractérisé en ce que le stade d'établissement d'un profil de vitesse de patinement comporte les étapes qui consistent à générer une rampe commençant à une vitesse de patinement initiale et ayant une première pente et une deuxième pente, la première pente étant relativement plus raide que la deuxième pente de manière à réduire la vitesse de patinement à une première vitesse supérieure, et la deuxième pente étant à même d'effectuer la synchronisation du dispositif transmetteur de couple d'arrivée.

2. Procédé selon la revendication 1 dans lequel le stade de préparation du dispositif transmetteur de couple d'arrivée pour instaurer un couple comprend les étapes qui consistent à appliquer une pression suffisante sur le dispositif transmetteur de couple d'arrivée pour provoquer le patinement du dispositif transmetteur de couple de départ, à détecter le patinement du dispositif transmetteur de couple de départ sur la base de la vitesse de la turbine et de la vitesse de sortie et à amorcer la période de commande en boucle fermée lors de la détection du patinement du dispositif transmetteur de couple de départ.

3. Procédé selon la revendication 1 ou 2, dans lequel le stade d'établissement du profil de vitesse de patinement comprend les étapes qui consistent à obtenir une fraction de la vitesse de patinement initiale à laquelle la première pente doit se terminer, un temps souhaité pour la première pente au cours duquel la rampe doit avoir la première pente, et un temps de patinement global souhaité, à déterminer le gradient de la première pente sur la base de la vitesse de patinement initiale, de la fraction et du temps souhaité pour la première pente, à déterminer le gradient de la deuxième pente sur la base de la vitesse de patinement initiale, de la fraction, du temps souhaité pour la première pente et du temps de patinement global souhaité, et à modifier le gradient de la rampe de la première pente à la deuxième pente lorsque la vitesse de patinement réelle atteint la fraction de la vitesse de patinement initiale.

4. Procédé selon l'une quelconque des revendications précédentes, dans lequel le changement se fait entre un rapport de vitesse supérieur, auquel est associé le dispositif transmetteur de couple de départ, et un rapport de vitesse inférieur, auquel est associé le dispositif transmetteur de couple d'arrivée.

5. Procédé selon la revendication 4, dans lequel le stade d'application d'une pression de départ diminuant progressivement sur le dispositif transmetteur de couple de départ est réalisé au cours d'une période de libération de pression, le procédé comprenant les étapes consistant, au cours de la période de libération de pression, à appliquer une pression d'arrivée sur le dispositif transmetteur de couple d'arrivée pendant une période réglée jusqu'à une pression d'arrivée initiale, à augmenter la pression d'arrivée à une cadence étalonnée pour obtenir une réduction prédéterminée de la vitesse de la turbine, à éliminer la pression de départ du dispositif transmetteur du couple de départ, et à déterminer la synchronisation du dispositif transmetteur de couple d'arrivée par une comparaison de la vitesse de la turbine et de la vitesse de sortie et, lorsque la vitesse de la turbine diminue jusqu'à une vitesse de synchronisation, à augmenter la pression d'arrivée à une valeur maximum pour compléter le changement de vitesse.

6. Procédé selon la revendication 5, dans lequel le stade d'application d'une pression de départ diminuant progressivement sur le dispositif transmetteur de couple de départ comprend l'étape qui consiste à appliquer une pression de départ intermédiaire pendant une période réglée, à appliquer une pression de rampe de départ initiale et à appliquer ensuite une pression de rampe de départ qui diminue.

7. Procédé selon la revendication 5 ou 6, comprenant l'étape consistant à comparer la vitesse de la turbine et le produit de la vitesse de sortie et du rapport de vitesse supérieur pour détecter la traction vers le bas de la vitesse de la turbine au cours de la période de libération de pression, dans lequel les stades d'élimination de pression du dispositif transmetteur de couple de départ et d'amorçage d'une période de commande en boucle fermée du dispositif transmetteur du couple d'arrivée sont réalisés par détection de la traction vers le bas de la vitesse de turbine.

8. Procédé selon la revendication 5, 6 ou 7, dans lequel la synchronisation est déterminée pour s'être produite lorsque la vitesse de la turbine est sensiblement égale au produit de la vitesse de sortie et du rapport de vitesse inférieur.

9. Procédé selon l'une quelconque des revendications 5 à 8, dans lequel le stade d'augmentation de la pression d'arrivée consiste à augmenter graduellement la pression entrante à la valeur maximum pour compléter le changement de vitesse, si la vitesse de la turbine diminue à une valeur inférieure à la valeur de synchronisation.

FIG. 1a

| RANGE | CLUTCHES APPLIED | | | | |
|---|---|---|---|---|---|
| | C1 | C2 | C3 | C4 | C5 |
| FWD 1 | X | | | | X |
| 2 | X | | | X | |
| 3 | X | | X | | |
| 4 | X | X | | | |
| 5 | | X | X | | |
| 6 | | X | | X | |
| REV 1 | | | X | | X |

FIG.1b

FIG.2

SOLENOID CONTROL LOGIC

140

144 LOCKUP SHIFT IN PROGRESS ?

142 LOCKUP CLUTCH CONTROL

YES

NO

146 RANGE SHIFT IN PROGRESS ?

NO

YES

168 AT CLOSED-THROTTLE ?

YES

NO

169 SET CLOSED-THROTTLE DOWNSHIFT IN PROGRESS FLAG

173 IS CLOSED-THROTTLE DOWNSHIFT IN PROGRESS FLAG SET ?

YES

NO

150 UPSHIFT ?

YES

NO

164 UPSHIFT ON-COMING CLUTCH CONTROL

152 DOWNSHIFT ?

YES

NO

166 UPSHIFT OFF-GOING CLUTCH CONTROL

(A) (B) (C) (D) (E) (F)

FIG. 3a

EP 0 435 376 B1

13

FIG. 3b

- 170 — CLOSED-THROTTLE DOWNSHIFT ON-COMING CLUTCH CONTROL
- 172 — CLOSED THROTTLE DOWNSHIFT OFF-GOING CLUTCH CONTROL
- 178 — CLOSED THROTTLE TO POWERED DOWNSHIFT TRANSITION LOGIC
- 174 — POWERED DOWNSHIFT ON-COMING CLUTCH CONTROL
- 176 — POWERED DOWNSHIFT OFF-GOING CLUTCH CONTROL
- 154 — NEUTRAL SHIFT ?  YES / NO
- 155 — NEUTRAL SHIFT CLUTCH CONTROL
- 156 — GARAGE SHIFT CLUTCH CONTROL
- 160 — END OF SHIFT ?  YES / NO
- 162 — CHANGE ADAPTIVE SHIFT PARAMETERS
- 163 — OUTPUT DUTY CYCLE COMMAND
- RETURN

14

FIG.4

FIG.5

UPSHIFT ON-COMING
CLUTCH LOGIC — 164

200
IS
SHIFT PHASE
= FILL
?
YES | NO

204
IS
SHIFT PHASE
= INIT PRESS
?
YES | NO

208
IS
SHIFT PHASE
= RAMP
?
YES | NO

212
IS
SHIFT PHASE
= CLOSED-LOOP
?
YES | NO

216
IS
SHIFT PHASE
= BELOW SYNC
?
YES | NO

202
COMMAND
FILL
PERIOD

206
COMMAND
INITIAL
PRESSURE

210
COMMAND
RAMP

214
COMMAND
CLOSED-LOOP

218
COMMAND RAMP
TO MAX PRESSURE

220
COMMAND
MAX
PRESSURE

FIG.6

END

FIG.7

FIG.8

FIG.9

166 — UPSHIFT OFF-GOING CLUTCH LOGIC

270 IS SHIFT PHASE =INITIAL ?

NO

274 IS SHIFT PHASE =OFF-GOING RAMP ?

NO

YES

272 COMMAND INITIAL PERIOD

276 COMMAND OFF-GOING RAMP

YES

278 COMMAND MINIMUM PRESSURE

END

FIG.10

272 INITIAL PERIOD

282 IS THIS FIRST PASS ?

YES

NO

280 INITIALIZE TIMER

284 DECREMENT TIMER

286 TIMER EXPIRED ?

YES

NO

COMMAND INITIAL OFF-GOING PRESS

290

288 COMMAND INITIAL OFF-GOING PRESS PLUS OFFSET

SHIFT PHASE= OFF-GOING RAMP

292

END

FIG.11

20